# EUROPEAN PATENT APPLICATION

(11) **EP 2 664 757 A1**
(43) Date of publication of application: **20.11.2013**
(21) Application number: 12734250.9
(22) Date of filing: 10.01.2012
(51) Int. Cl.: F01N 3/08

(54) **AQUEOUS UREA TANK STRUCTURE FOR CONSTRUCTION MACHINE**

(30) Priority: 14.01.2011 JP 2011006230
(71) Applicant: Hitachi Construction Machinery Co., Ltd., Bunkyo-ku Tokyo 112-8563 (JP)
(72) Inventor: KOBAYASHI Takahiro, Tsuchiura-shi Ibaraki 300-0013 (JP); NAKAMURA Tsuyoshi, Tsuchiura-shi Ibaraki 300-0013 (JP); SATO Kensuke, Tsuchiura-shi Ibaraki 300-0013 (JP); AZUMA Hiroyuki, Tsuchiura-shi Ibaraki 300-0013 (JP)
(74) Representative: Beetz & Partner
(86) International application number: PCT/JP2012/050258
(87) International publication number: WO 2012/096254

(57) **Abstract**

[Problem] To provide an aqueous urea tank structure for a construction machine, in which the rise of the temperature of the aqueous urea within the aqueous urea tank can be suppressed and the load applied to the aqueous urea tank due to vibration of a vehicle body can be reduced.

[Solution] An aqueous urea tank structure for a hydraulic excavator (1), the aqueous urea tank structure being provided in the hydraulic excavator (1) which has a revolving upperstructure (3), an engine disposed within the revolving upperstructure (3), and a hydraulic pump driven by the drive force of the engine, the aqueous urea tank structure including an aqueous urea tank (11) which is disposed within the revolving upperstructure (3) to store aqueous urea (11a) that purifies the exhaust gas discharged from the engine, wherein: the aqueous urea tank structure further includes a securing member which encloses the periphery of the aqueous urea tank (11) to secure the aqueous urea tank (11) within the revolving upperstructure (3), and heat insulating materials (13a, 13b) which are interposed between the securing member and the aqueous urea tank (11) to hold the aqueous urea tank (11); and the securing member contains a box (12).

## Description

### TECHNICAL FIELD

The present invention relates to an aqueous urea tank structure for a construction machine, including an aqueous urea tank for storing aqueous urea that purifies exhaust gas discharged from an engine.

### BACKGROUND ART

A construction machine such as a hydraulic excavator generally has a travel base which has a crawler belt or the like and travels, a revolving upperstructure which is disposed above the travel base and connected thereto through a slewing frame so as to slew in a left/right direction, and a front work device which is provided in front of the revolving upperstructure and has actuators so as to perform work such as excavation. The revolving upperstructure has an engine which is provided inside the revolving upperstructure, and a hydraulic pump which is driven by the drive force of the engine so as to supply hydraulic pressure to the actuators. In addition, the revolving upperstructure is also provided with an exhaust duct for discharging, to the outside, exhaust gas emitted from the engine.

Here, the exhaust gas emitted from the engine contains harmful nitrogen oxide. It is therefore necessary to reduce the nitrogen oxide to thereby decompose the nitrogen oxide into water and nitrogen and reduce the concentration of the nitrogen oxide contained in the exhaust gas before the exhaust gas is discharged to the atmosphere. To that end, the construction machine has an exhaust gas purifying apparatus for reducing and purifying nitrogen oxide contained in exhaust gas.

For example, this exhaust gas purifying apparatus includes an aqueous urea tank for storing aqueous urea, a reduction catalyst provided in an exhaust duct, and an injector disposed in the exhaust duct on an upstream side of the reduction catalyst to inject the aqueous urea supplied from the aqueous urea tank into the exhaust duct. The aqueous urea injected by the injector is hydrolyzed by the heat of the exhaust gas so that nitrogen oxide contained in the exhaust gas can be decomposed to harmless water and nitrogen and purified by reduction reaction between ammonia produced by the hydrolysis and the nitrogen oxide in the reduction catalyst.

In this manner, the aqueous urea to be injected into the exhaust duct by the injector is stored in a liquid state in the aqueous urea tank. However, the melting point of the aqueous urea is about -11°C. Thus, the aqueous urea stored in the aqueous urea tank may be frozen due to the drop in outside air temperature. When the aqueous urea in the aqueous urea tank is frozen, the work of warming and defrosting the aqueous urea by means of a heater or the like is required. It has been a fear that this work of defrosting the aqueous urea may be troublesome. Therefore, in the background art, the aqueous urea tank is disposed near a heat source such as an engine or a hydraulic pump so as to prevent the aqueous urea in the aqueous urea tank from being frozen, or the frozen aqueous urea is defrosted by heat generated by driving the engine, the hydraulic pump or the like.

For example, as one of background-art techniques of an apparatus in which an aqueous urea tank is disposed near an engine, a hydraulic pump or the like, there is known an exhaust gas aftertreatment apparatus for a working machine, including an aqueous urea tank which is disposed under a hydraulic pump to store liquid reductant, that is, aqueous urea internally, and a supply port which is provided in a counterweight to supply the aqueous urea into the aqueous urea tank, wherein the work of supplying the aqueous urea is performed so easily that the maintainability is enhanced (see Patent LITERATURE 1).

### CITATION LIST

### PATENT LITERATURE

Patent Literature 1: JP-A-2009-68395

### SUMMARY OF INVENTION

### TECHNICAL PROBLEM

In the aforementioned exhaust gas aftertreatment apparatus for a working machine in the background art disclosed in Patent Literature 1, the aqueous urea tank for storing aqueous urea is provided under the hydraulic pump. Thus, the operating heat of the hydraulic pump is transmitted to the aqueous urea tank so that the aqueous urea in the aqueous urea tank can be warmed and prevented from being frozen. However, in addition to the hydraulic pump, devices generating heat, such as an engine, a muffler, etc., are disposed inside the revolving upperstructure. There is a possibility that the temperature of the aqueous urea in the aqueous urea tank may rise more than necessary due to the driving heat of the engine or the heat of the high-temperature exhaust gas circulating in the muffler. Particularly in a construction machine such as a hydraulic excavator, the inside of the revolving upperstructure cannot be expected to be cooled by the wind generated by the travel of the construction machine itself. Therefore, the aqueous urea tank may reach a high temperature of 50°C or higher according to the layout of the aqueous urea tank in the revolving upperstructure.

When the temperature of the aqueous urea in the aqueous urea tank rises excessively, the stored aqueous urea is evaporated partially so as to change the concentration of the aqueous urea in the aqueous urea tank. As a result, there is a fear that the injector cannot supply the aqueous urea with a suitable concentration into the exhaust duct, and nitrogen oxide in exhaust gas cannot be purified satisfactorily in the exhaust duct. In addition, when the aqueous urea is evaporated, ammonia is produced. Therefore, there is also a fear that the aqueous urea tank may be corroded by the produced ammonia so that the aqueous urea tank may be degraded.

Here, the aqueous urea tank is generally formed of a material such as resin or stainless steel highly corrosion-resistant to the aqueous urea. It is, however, difficult to set the aqueous urea tank to have a large thickness because the material is expensive or because of reasons in a manufacturing process. Therefore, when a strong load is applied to the aqueous urea tank due to vibration caused by work such as excavation, the body of the aqueous urea tank may be impacted and damaged, or of the aqueous urea tank, the portion fixed in the revolving upperstructure may be cracked. Thus, there is a fear that the aqueous urea may leak from the aqueous urea tank.

The invention is accomplished in consideration of the aforementioned actual circumstances of the background art. An object of the invention is to provide an aqueous urea tank structure for a construction machine, in which the rise of the temperature of the aqueous urea within the aqueous urea tank can be suppressed and the load applied to the aqueous urea tank due to vibration of a vehicle body can be reduced.

### SOLUTION TO PROBLEM

In order to achieve the foregoing object, according to the invention, there is provided an aqueous urea tank structure for a construction machine, the aqueous urea tank structure being provided in the construction machine which has a revolving upperstructure, an engine disposed within the revolving upperstructure, and a hydraulic pump driven by the drive force of the engine, the aqueous urea tank structure including an aqueous urea tank which is disposed within the revolving upperstructure to store aqueous urea that purifies exhaust gas discharged from the engine, the aqueous urea tank structure being characterized in that: the aqueous urea tank structure further includes a securing member which encloses the periphery of the aqueous urea tank and secures the aqueous urea tank within the revolving upperstructure, and heat insulating materials which are interposed between the securing member and the aqueous urea tank to hold the aqueous urea tank.

According to the invention configured thus, even when the temperature in the revolving upperstructure rises due to the heat generated by devices such as the engine or the hydraulic pump disposed within the revolving upperstructure, the heat insulating materials interposed between the securing member for securing the aqueous urea tank within the revolving upperstructure and the aqueous urea tank can prevent the heat outside the securing member from being transmitted to the aqueous urea tank. Therefore, the rise of the temperature of the aqueous urea in the aqueous urea tank can be suppressed so that the concentration of the aqueous urea in the aqueous urea tank can be kept within a fixed range. In addition, evaporation of the aqueous urea stored in the aqueous urea tank can be suppressed so that the amount of ammonia produced in the aqueous urea tank can be reduced. Thus, the aqueous urea tank can be prevented from being corroded and degraded by the ammonia.

In addition, according to the invention, the securing member encloses the periphery of the aqueous urea tank so as to secure the aqueous urea tank within the revolving upperstructure, and the heat insulating materials are interposed between the securing member and the aqueous urea tank to hold the aqueous urea tank. Thus, even when vibration occurs in a vehicle body due to work, the aqueous urea tank is prevented from moving inside the securing member, so that the impact of the vibration on the aqueous urea tank can be relaxed. In addition, the aqueous urea tank is held by means of the heat insulating materials as described above, so that the aqueous urea tank can be prevented from coming into contact with the securing member. Thus, the aqueous urea tank can be prevented from suffering strong stress locally from the securing member, so that the damage of the aqueous urea tank can be suppressed. In this manner, the rise of the temperature of the aqueous urea in the aqueous urea tank can be suppressed, while the load applied to the aqueous urea tank due to the vibration of the vehicle body can be reduced.

In addition, according to the invention, there is provided an aqueous urea tank structure for a construction machine in the aforementioned configuration, characterized in that: the securing member contains a box. With this configuration, when the aqueous urea tank is placed within the revolving upperstructure, it will be go well, for example, as long as the aqueous urea tank is put into the box and the heat insulating materials are laid between the aqueous urea tank and the box while the box is placed within the revolving upperstructure. It is therefore possible to perform the installation work of the aqueous urea tank easily. In addition, when the aqueous urea tank is removed from the box even after the box is placed within the revolving upperstructure, maintenance work such as supply with the aqueous urea to be stored in the aqueous urea tank can be performed easily. Further, the box can be disposed easily in a space formed among devices etc. provided in the revolving upperstructure. The space among the devices can be used effectively. Thus, it is possible to suppress a new dead space that may be produced between the box and each device in the revolving upperstructure or the wall of the revolving upperstructure when the box is placed.

In addition, according to the invention, there is provided an aqueous urea tank structure for a construction machine in the aforementioned configuration, characterized in that: the securing member contains a frame. With this configuration, the aqueous urea tank can be secured within the revolving upperstructure with small amounts of members. Therefore, the cost can be reduced.

In addition, according to the invention, there is provided an aqueous urea tank structure for a construction machine in the aforementioned configuration, characterized in that: the heat insulating materials are disposed in some parts of a space between the securing member and the aqueous urea tank. With this configuration, air layers in contact with the aqueous urea tank can be acquired between adjacent ones of the heat insulating materials disposed in the parts of the space. Here, the air generally has a low thermal conductivity and a high heat insulating effect. Therefore, even when the heat insulating materials are not provided all over the periphery of the aqueous urea tank, transmission of heat within the revolving upperstructure to the aqueous urea tank can be suppressed by the heat insulating materials disposed in the parts of the space and the air layers. Thus, the amount of the heat insulating materials between the securing member and the aqueous urea tank can be reduced so that the cost can be reduced on a large scale.

In addition, according to the invention, there is provided an aqueous urea tank structure for a construction machine in the aforementioned configuration, characterized in that: one of the heat insulating materials which is provided in a bottom portion of the aqueous urea tank is made of a rubber material. With this configuration, the rubber material supports the aqueous urea tank from below so that the load applied to the aqueous urea tank can be relaxed by the elasticity of the rubber material. Particularly, the bottom portion of the aqueous urea tank suffers the normal force against its own weight from the heat insulating material. Thus, a larger load is applied to the bottom portion of the aqueous urea tank than to any other portion of the aqueous urea tank. The bottom portion of the aqueous urea tank suffers not only the normal force against its own weight, that is, the load of the aqueous urea tank (heavy object) from the heat insulating material, but also the influence of vibration caused by work or the like easily. Accordingly, when the rubber material supports the aqueous urea tank from below, the durability and vibration resistance of the aqueous urea tank can be improved.

### ADVANTAGEOUS EFFECTS OF INVENTION

An aqueous urea tank structure for a construction machine according to the invention is provided in the construction machine which has an engine disposed within a revolving upperstructure, and a hydraulic pump driven by the drive force of the engine, and the aqueous urea tank structure includes an aqueous urea tank which is disposed within the revolving upperstructure to store aqueous urea that purifies exhaust gas discharged from the engine. The aqueous urea tank structure for the construction machine further includes a securing member which encloses the periphery of the aqueous urea tank and secures the aqueous urea tank within the revolving upperstructure, and heat insulating materials which are interposed between the securing member and the aqueous urea tank to hold the aqueous urea tank. Accordingly, due to the heat insulating materials, the heat outside the securing member can be prevented from being transmitted to the aqueous urea tank. Therefore, the rise of the temperature of the aqueous urea in the aqueous urea tank can be suppressed so that the concentration of the aqueous urea can be kept within a fixed range. In addition, evaporation of the aqueous urea stored in the aqueous urea tank can be suppressed so that the amount of ammonia produced can be reduced. Thus, corrosion and degradation of the aqueous urea tank by the ammonia can be suppressed.

Further, in the aqueous urea tank structure for the construction machine according to the invention, the securing member encloses the periphery of the aqueous urea tank so as to secure the aqueous urea tank within the revolving upperstructure, and the heat insulating materials are interposed between the securing member and the aqueous urea tank so as to hold the aqueous urea tank. Thus, even when vibration occurs in a vehicle body due to work, the aqueous urea tank is prevented from moving inside the securing member. In addition, due to the heat insulating materials, the aqueous urea tank can be prevented from suffering strong stress locally from the securing member, so that the damage of the aqueous urea tank can be suppressed. In this manner, the rise of the temperature of the aqueous urea in the aqueous urea tank can be suppressed, while the load applied to the aqueous urea tank due to vibration of the vehicle body can be reduced. As a result, the temperature of the aqueous urea in the aqueous urea tank can be kept moderate and the durability of the aqueous urea tank can be improved, in comparison with the background art.

### BRIEF DESCRIPTION OF DRAWINGS

[Fig. 1] A side view showing a hydraulic excavator depicted as an example of a construction machine in which a first embodiment of an aqueous urea tank structure according to the invention is provided.
[Fig. 2] A side view showing the configuration of the first embodiment of the aqueous urea tank structure for the construction machine according to the invention.
[Fig. 3] A perspective view for explaining the configuration of a box provided in the first embodiment of the invention shown in Fig. 2.
[Fig. 4] A view for explaining the configuration of another example of a securing member provided in the first embodiment of the invention.
[Fig. 5] A view for explaining the configuration of a frame in the securing member shown in Fig. 4.
[Fig. 6] A side view showing the configuration of a second embodiment of an aqueous urea tank structure for a construction machine according to the invention.
[Fig. 7] A side view showing the configuration of a third embodiment of an aqueous urea tank structure for a construction machine according to the invention.

### DESCRIPTION OF EMBODIMENTS

Embodiments of an aqueous urea tank structure for a construction machine according to the invention will be described below with reference to the drawings.

### [First Embodiment]

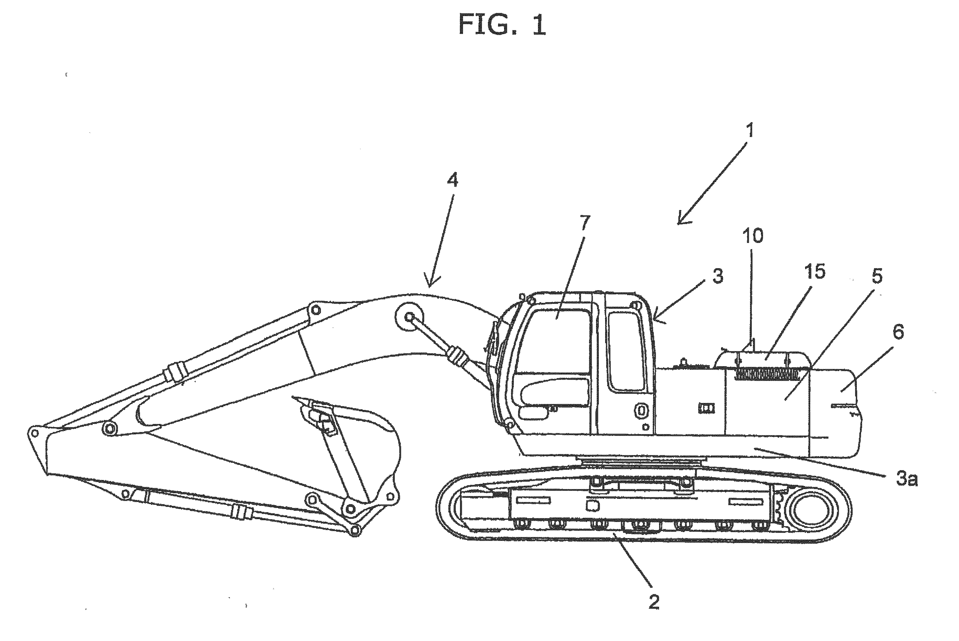

A first embodiment of an aqueous urea tank structure for a construction machine according to the invention is, for example, provided in a hydraulic excavator 1 as shown in Fig. 1. The hydraulic excavator 1 has a travel base 2, a revolving upperstructure 3 disposed on an upper side of the travel base 2 and having a slewing frame 3a, and a front work device 4 attached to the front of the revolving upperstructure 3 and revolving in an up/down direction. In addition, the revolving upperstructure 3 has a cab 7 in the front thereof and a counterweight 6 in the rear thereof. The revolving upperstructure 3 also has an engine room 5 between the cab 7 and the counterweight 6, and a vehicle body cover 15 disposed on an upper portion of the engine room 5. An exhaust port 10 through which exhaust gas emitted from an engine which will be described later is discharged to the outside is provided in the vehicle body cover 15.

The revolving upperstructure 3 has the engine which is not shown but provided in the engine room 5, a hydraulic pump which is driven by the drive force of the engine to supply hydraulic pressure to the front work device 4, and an aqueous urea tank which will be described later and which stores aqueous urea that purifies exhaust gas discharged from the engine. In addition, the revolving upperstructure 3 has an exhaust duct which connects the engine and the exhaust port 10 of the vehicle body cover 15 so that the exhaust gas discharged from the engine can be introduced to the exhaust port 10, a reduction catalyst which is provided in the exhaust duct, and an injector which is disposed in the exhaust duct on an upstream side of the reduction catalyst so that the aqueous urea supplied from the aqueous urea tank can be injected into the exhaust duct. In the reduction catalyst, ammonia produced from the aqueous urea injected by the injector reduces harmful nitrogen oxide contained in the exhaust gas so as to decompose the nitrogen oxide into harmless water and nitrogen.

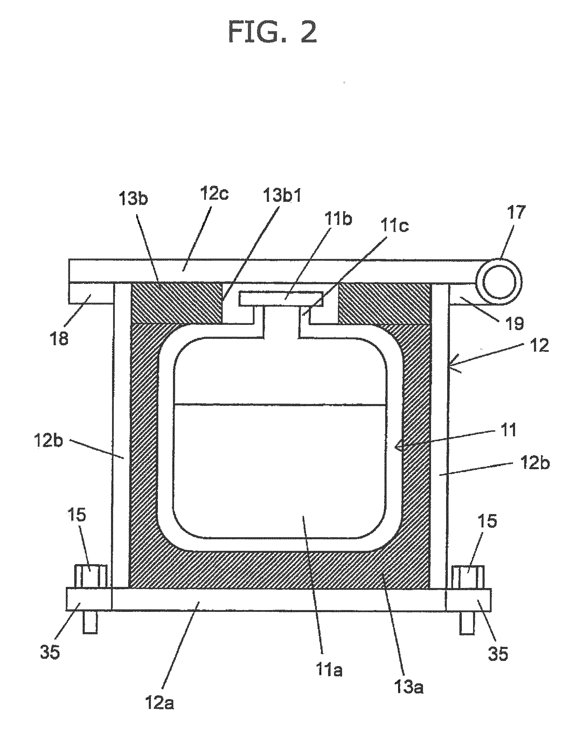

The first embodiment of the aqueous urea tank structure for the construction machine according to the invention includes an aqueous urea tank 11 which stores the aforementioned aqueous urea 11a as shown in Fig. 2, a securing member which will be described later and which encloses the periphery of the aqueous urea tank 11 so as to secure the aqueous urea tank 11 within the revolving upperstructure 3, and heat insulating materials 13a and 13b which are interposed between the securing member and the aqueous urea tank 11 so as to hold the aqueous urea tank 11.

Specifically, the aqueous urea tank 11 has a supply port 11c provided in an upper portion thereof for the purpose of supplying the aqueous urea 11a, and a cover 11b closed to prevent the aqueous urea 11a from leaking to the outside. Each of corner portions of the aqueous urea tank 11 is formed into a rounded shape. The aforementioned securing member includes, for example, a box 12. The box 12 has a bottom plate 12a provided in a lower portion of the box 12 and serving as a base, four side plates 12b erectly on the bottom plate 12a, and a top cover 12c provided in an upper portion of the box 12 and formed to be capable of taking the aqueous urea tank 11 in or out.

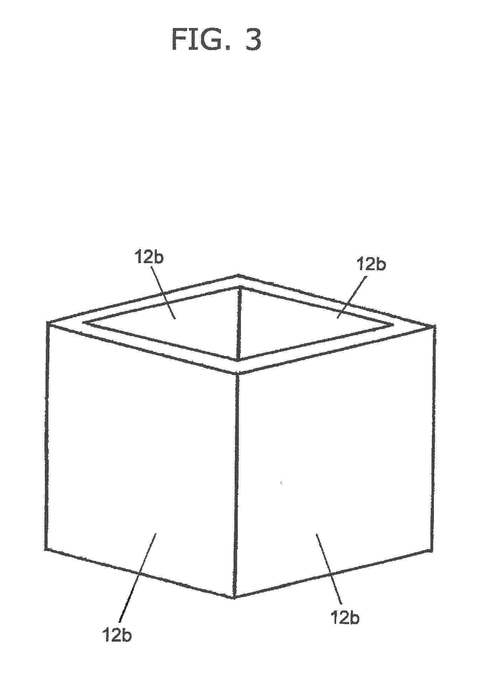

The four side plates 12b and the bottom plate 12a are formed by bonding flat plates by welding or the like as shown in Fig. 3. In addition, four mounting portions 35 to which bolts 15 for fixing the box 12 within the revolving upperstructure 3 are attached are provided in the four corners of the bottom plate 12a respectively as shown in Fig. 2. A hinge 17 is provided on an upper end of one side plate 12b of the four side plates 12b through a mounting portion 19 so that the top cover 12c can be opened/closed by the hinge 17. In addition, a pedestal 18 which matches with the top cover 12c when the top cover 12c is closed is provided on an upper end of the side plate 12b opposite to the side plate 12b provided with the hinge 17, of the four side plates 12b. The size of each flat plate for the side plates 12b is set to be larger than the height of the aqueous urea tank 11, and the size of each flat plate for the bottom plate 12a and the top cover 12c is set to be larger than the width of the aqueous urea tank 11, so that the aqueous urea tank 11 including the supply port 11c can be received in the box 12.

The heat insulating material 13a is laid between the box 12 and the lower portion and the side portions of the aqueous urea tank 11 so as to come into tight contact therewith. On the other hand, the heat insulating material 13b is inserted between the box 12 and the upper portion of the aqueous urea tank 11 to enclose the supply port 11c of the aqueous urea tank 11, so that the aqueous urea tank 11 can be supplied with the aqueous urea 11a through the supply port 11c when the top cover 12c of the box 12 is opened. For example, the heat insulating material 13b is formed out of a rectangular parallelepiped set to have a width as large as the inner width of the box 12, and has a through hole 13b1 in the central portion. The through hole 13b1 is larger than the diameter of the cover 11b of the aqueous urea tank 11. In addition, configuration is made so that the top cover 12c of the box 12 can press the heat insulating materials 13a and 13b downward by means of the hinge 17 so as to create a tight seal. In this manner, the aqueous urea tank 11 is received in the box 12 in the state where the aqueous urea tank 11 is held by the heat insulating materials 13a and 13b. For example, a side face of the box 12 is disposed near the engine, and the box 12 is fixed to the slewing frame 3a by the bolts 15.

According to the first embodiment of the invention configured thus, even when the temperature within the revolving upperstructure 3 rises due to heat generated by a device such as the engine or the hydraulic pump disposed within the revolving upperstructure 3, transmission of the heat outside the box 12 to the aqueous urea tank 11 received in the box 12 can be suppressed by the heat insulating materials 13a and 13b because the heat insulating material 13a is laid between the box 12 and the lower portion and the side portions of the aqueous urea tank 11 and the heat insulating material 13b is inserted between the box 12 and the upper portion of the aqueous urea tank 11 so as to enclose the supply port 11c of the aqueous urea tank 11. Thus, the rise of the temperature of the aqueous urea 11a in the aqueous urea tank 11 can be suppressed so that the concentration of the aqueous urea 11a in the aqueous urea tank 11 can be kept within a fixed range. Accordingly, the injector can supply the aqueous urea 11a with a suitable concentration into the exhaust duct so that the nitrogen oxide in the exhaust gas can be purified satisfactorily in the exhaust duct. Thus, the reliability can be enhanced.

In addition, even when the aqueous urea tank 11 is disposed near a device generating heat, such as the engine or the hydraulic excavator, the rise of the temperature of the aqueous urea 11a within the aqueous urea tank 11 can be suppressed so that evaporation of the aqueous urea 11a stored in the aqueous urea tank 11 can be suppressed. Accordingly, the amount of ammonia produced within the aqueous urea tank 11 can be reduced so that corrosion and degradation of the aqueous urea tank 11 by the ammonia can be suppressed.

In addition, according to the first embodiment of the invention, the aqueous urea tank 11 is received in the box 12 in the state where the aqueous urea tank 11 is held by the heat insulating materials 13a and 13b. Accordingly, even when vibration occurs in the vehicle body due to work such as excavation performed by the hydraulic excavator 1, the aqueous urea tank 11 can be prevented from moving within the box 12 so that the impact of the vibration applied to the aqueous urea tank 11 can be relaxed. In addition, due to the rounded corner portions of the aqueous urea tank 11, the heat insulating materials 13a and 13b can be brought into tight contact with the aqueous urea tank 11 so as to conform to the shape of the aqueous urea tank 11 and hold the aqueous urea tank 11 easily. Thus, the influence of vibration with a high frequency can be reduced.

Further, the aqueous urea tank 11 is covered and retained with the heat insulating materials 13a and 13b in the box 12 so as to be prevented from coming into contact with the inner wall of the box 12. Thus, the aqueous urea tank 11 can be prevented from suffering strong stress locally from the box 12. Particularly, due to the heat insulating materials 13a and 13b, the aqueous urea tank 11 is also prevented from coming into contact with the bolts 15 fixing the box 12 to the slewing frame 3a. Thus, the aqueous urea tank 11 can be prevented from coming into contact with the bolts 15 repeatedly to fatigue. It is therefore possible to suppress the damage of the aqueous urea tank 11. In this manner, the rise of the temperature of the aqueous urea 11a in the aqueous urea tank 11 can be suppressed while the load applied to the aqueous urea tank 11 due to vibration of the vehicle body can be reduced. As a result, the temperature of the aqueous urea 11a in the aqueous urea tank 11 can be kept moderate, while the durability of the aqueous urea tank 11 can be improved.

In addition, according to the first embodiment of the invention, the securing member contains the box 12. Accordingly, when the aqueous urea tank 11 is placed within the revolving upperstructure 3, for example, the top cover 12c of the box 12 is opened, the heat insulating material 13a is laid in the lower portion of the box 12, and the aqueous urea tank 11 is mounted on the heat insulating material 13a laid on the lower portion of the box 12 so that the aqueous urea tank 11 does not come into contact with the side plates 12b of the box 12. The heat insulating material 13a is then inserted between the aqueous urea tank 11 and the side plates 12b of the box 12. After that, the heat insulating material 13b is laid in the upper portion of the box 12 so that the cover 11b and the supply port 11c of the aqueous urea tank 11 penetrate the through hole 13b1 of the heat insulating material 13b. The top cover 12c is closed, and the box 12 is fixed to the slewing frame 3a by the bolts 15. In this manner, only a tool for fastening the bolts 15 is used without use of any other special tool. Thus, the work of installing the aqueous urea tank 11 can be performed so easily that the burden on workers can be lightened.

In addition, even after the box 12 is placed within the revolving upperstructure 3, the aqueous urea 11a can be supplied to the aqueous urea tank 11 through the supply port 11c when the cover 12c of the box 12 is opened. Accordingly, maintenance work such as supply with the aqueous urea 11a to be stored in the aqueous urea tank 11 can be performed so easily that the efficiency of the work can be improved. Further, the box 12 can be easily disposed in a space which is formed among devices etc. provided within the revolving upperstructure 3. The space among the devices can be used effectively. Thus, it is possible to suppress a new dead space which may be produced between the box 12 and each device within the revolving upperstructure 3 or the wall of the revolving upperstructure 3 when the box 12 is placed.

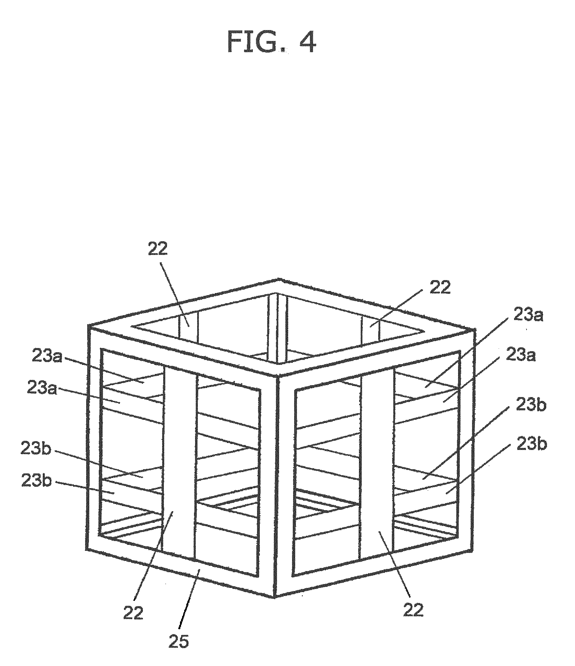

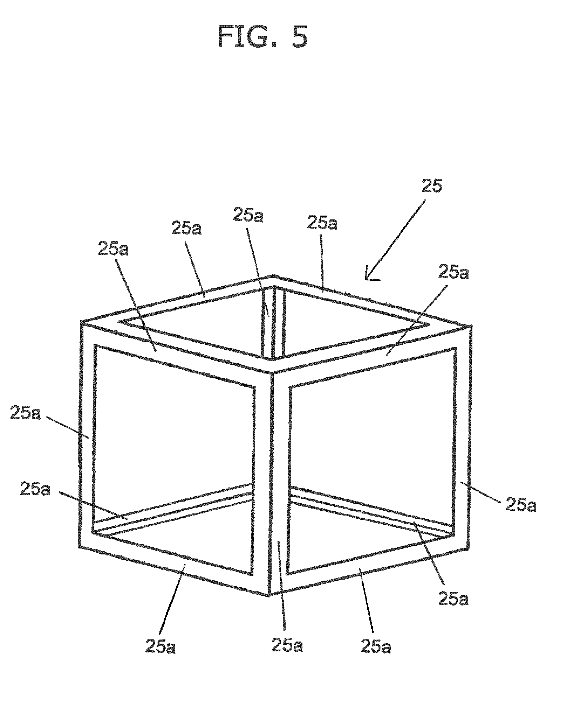

Although the case where the securing member includes the box 12 as shown in Fig. 2 has been described in the aforementioned first embodiment of the invention, the first embodiment is not limited to this case, but the securing member may include, for example, a frame 25 in place of the box 12 as shown in Figs. 4 and 5. In this case, the securing member includes flat plates 22, 23a and 23b provided in at least one of the six faces of the frame 25 shown in Fig. 5, for example, like a lattice in each of the four side faces as shown in Fig. 4.

Specifically, the frame 25 is constituted by twelve L-shaped brackets 25a joined with one another by welding or the like as shown in Fig. 5. As shown in Fig. 4, one flat plate 22 having a rectangular shape is attached to each side face of the frame 25 by welding or the like so as to be connected to the inner central portions of the brackets 25a formed as horizontal frame bars. Further, in each side face of the frame 25, the two flat plates 23a and 23b each having a rectangular shape are attached to the brackets 25a formed as vertical frame bars respectively so as to be perpendicular to the flat plate 22. Of these two flat plates 23a and 23b, the flat plate 23a is disposed a little above the central positions of the brackets 25a formed as the vertical frame bars, while the flat plate 23b is disposed a little under the central positions of the brackets 25a formed as the vertical frame bars.

In the thus formed configuration, the securing member includes the frame 25. For example, when twelve L-shaped brackets 25a are joined with one another by welding or the like as described above, the frame of the securing member can be made up easily and inexpensively. It is therefore possible to reduce the manufacturing cost of the securing member. In addition, when the flat plates 22, 23a and 23b provided like a lattice are attached to each of the four side faces of the six faces of the frame 25 of the securing member, the frame 25 of the securing member is supported by the flat plates 22, 23a and 23b provided like a lattice. Thus, the frame 25 can be prevented from being deformed by vibration caused by work such as excavation performed by the hydraulic excavator 1 or by long-term use.

Further, the flat plates 22, 23a and 23b support the heat insulating material 13a, which is interposed between the frame 25 of the securing member and the aqueous urea tank 11, from outside. Accordingly, the aqueous urea tank 11 can be secured firmly inside the frame 25. Thus, the strength of the frame 25 can be enhanced by the flat plates 22, 23a and 23b provided on the side faces of the frame 25 of the securing member while the stability of the aqueous urea tank 11 disposed inside the frame 25 can be enhanced.

Although the case where the securing member includes the frame 25 and the flat plates 22, 23a and 23b are provided like a lattice on each of the four side faces of the frame 25 has been described above, the flat plates 22, 23a and 23b do not have to be provided on the frame 25 as shown in Fig. 5 when the heat insulating materials have rigidity.

### [Second Embodiment]

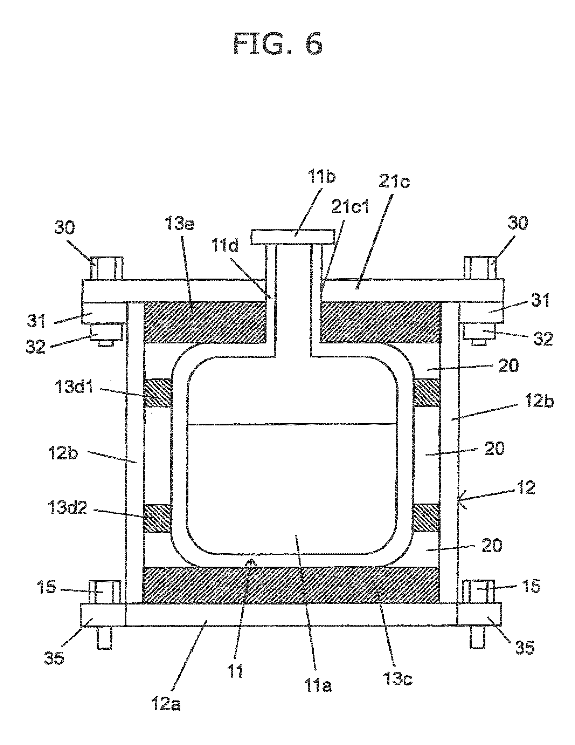

Fig. 6 is a side view showing the configuration of a second embodiment of an aqueous urea tank structure for a construction machine according to the invention.

In the first embodiment, as shown in Fig. 2, the securing member includes the box 12, the heat insulating material 13a is laid between the box 12 and the lower portion and the side portions of the aqueous urea tank 11 so as to come into tight contact therewith, and the heat insulating material 13b is further inserted between the box 12 and the upper portion of the aqueous urea tank 11 so as to enclose the supply port 11c of the aqueous urea tank 11. The second embodiment of the invention is different from the aforementioned first embodiment in that heat insulating materials 13c, 13d1, 13d2 and 13e are disposed, for example, in some parts of a space between the box 12 and the aqueous urea tank 11 in the second embodiment as shown in Fig. 6.

In this case, the heat insulating material 13c is laid on the lower portion of the box 12 so as to support the aqueous urea tank 11 from below, and the heat insulating material 13e is laid on the upper portion of the box 12 so as to support the aqueous urea tank 11 from above. On the other hand, each of the two heat insulating materials 13d1 and 13d2 is provided like a ring to enclose the periphery of the aqueous urea tank 11 so as to support the aqueous urea tank 11 from side. Of the two heat insulating materials 13d1 and 13d2, the heat insulating material 13d1 is disposed in a position away from the heat insulating material 13e a little above the center of the box 12, and the heat insulating material 13d2 is disposed in a position away from the heat insulating material 13c a little below the center of the box 12.

Thus, inside the box 12, air layers 20 in contact with the aqueous urea tank 11 are formed between the heat insulating material 13c and the heat insulating material 13d2 adjacent to each other, between the heat insulating material 13d2 and the heat insulating material 13d1 adjacent to each other, and between the heat insulating material 13d1 and the heat insulating material 13e adjacent to each other, respectively. In the second embodiment of the invention, a supply port 11d of the aqueous urea tank 11 is set to be longer than the supply port 11c in the first embodiment, so as to get out of the box 12 upward.

In addition, according to the second embodiment of the invention, a top cover 21c having a through hole 21c1 at the center is provided in place of the top cover 12c in the first embodiment. The supply port 11d of the aqueous urea tank 11 penetrates the through hole 21c1. Not-shown through holes into which bolts 30 are inserted are provided in the four corners of the top cover 21c respectively. In addition, mounting portions 31 are attached to the four corners of the upper portion of the box 12 and in conformity to the four corners of the top cover 21c respectively. Each mounting portion 31 has a not-shown through hole into which the bolt 30 is inserted. In the state where the supply port 11d of the aqueous urea tank 11 is inserted into the through hole 21c1 of the top cover 21c, the top cover 21c is mounted on the box 12 so as to mate the through holes of the four corners of the top cover 21c with the through holes of the mounting portions 31 of the upper portion of the box 12 respectively. The four bolts 30 are inserted through the through holes of the top cover 21c and the through holes of the mounting portions 31 respectively. The bolts 30 are fastened to nuts 32 respectively to fix the top cover 21c to the box 12. The other configuration is the same as that in the first embodiment.

According to the second embodiment of the invention configured thus, the heat insulating materials 13c, 13d1, 13d2 and 13e are disposed in some parts of a space between the box 12 and the aqueous urea tank 11. Accordingly, the air layers 20 in contact with the aqueous urea tank 11 can be acquired between the heat insulating material 13c and the heat insulating material 13d2 adjacent to each other, between the heat insulating material 13d2 and the heat insulating material 13d1 adjacent to each other, and between the heat insulating material 13d1 and the heat insulating material 13e adjacent to each other, respectively. Here, the air generally has a low heat conductivity and a high heat insulating effect. Accordingly, even when the heat insulating materials are not provided all over the periphery of the aqueous urea tank 11, transmission of the heat within the revolving upperstructure 3 to the aqueous urea tank 11 can be suppressed by the heat insulating materials 13c, 13d1, 13d2 and 13e disposed in the some parts of the space and the air layers 20. Thus, the amount of the heat insulating materials between the box 12 and the aqueous urea tank 11 can be reduced so that the cost can be reduced on a large scale.

### [Third Embodiment]

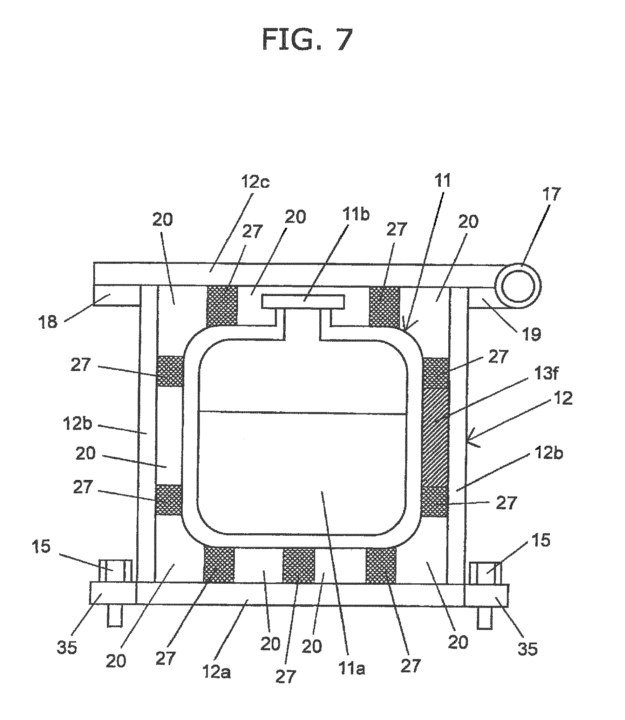

Fig. 7 is a side view showing the configuration of a third embodiment of an aqueous urea tank structure for a construction machine according to the invention.

In the aforementioned first embodiment, as shown in Fig. 2, the heat insulating material 13a is laid between the box 12 and the lower portion and the side portions of the aqueous urea tank 11 so as to come into tight contact therewith, and the heat insulating material 13b is further inserted between the box 12 and the upper portion of the aqueous urea tank 11 so as to enclose the supply port 11c of the aqueous urea tank 11. The third embodiment of the invention is different from the first embodiment in that heat insulating materials are disposed, for example, in some parts of a space between the box 12 and the aqueous urea tank 11 in the same manner as in the second embodiment, and of the heat insulating materials, the heat insulating material provided on the bottom portion of the aqueous urea tank 11 is made of a rubber material 27 in the third embodiment, as shown in Fig. 7. In addition, in the third embodiment of the invention, of the heat insulating materials, the heat insulating materials provided in the upper portion and side portions of the aqueous urea tank 11 are also made of rubber materials 27.

Specifically, thirteen rubber materials 27 are inserted into some parts of a space between the box 12 and the aqueous urea tank 11 and around the aqueous urea tank 11. Each of the thirteen rubber materials 27 has a rectangular parallelepiped shape. That is, of the thirteen rubber materials 27, three rubber materials 27 are disposed under the aqueous urea tank 11, and of the three rubber materials 27, one rubber material 27 is disposed to support the central portion of the aqueous urea tank 11 from below while the other two rubber materials 27 are disposed to support the opposite ends of the bottom face of the aqueous urea tank 11 from below respectively. In addition, of the rest ten rubber materials 27, eight rubber materials 27 are disposed laterally to the aqueous urea tank 11 so that two rubber materials 27 are disposed on every side face of the aqueous urea tank 11. These every two rubber materials 27 are disposed to support the upper and lower opposite ends of each side face of the aqueous urea tank 11 from side respectively. Further, above the aqueous urea tank 11, the rest two rubber materials 27 are disposed to support the opposite ends of the top face of the aqueous urea tank 11 from above respectively. Thus, inside the box 12, the air layers 20 in contact with the aqueous urea tank 11 are formed between adj acent ones of the rubber materials 27 respectively.

According to the third embodiment of the invention, a heat insulating material 13f is provided, which is disposed around the aqueous urea tank 11 and on the close side to at least one of the engine and the hydraulic pump, for example, around the aqueous urea tank 11 and on the close side to the engine. As described above, for example, a side face of the box 12 is disposed near the engine. Therefore, the heat insulating material 13f is disposed in the air layer 20 which is in contact with the closest side face to the engine, of the four side faces of the aqueous urea tank 11.

According to the third embodiment of the invention configured thus, the thirteen rubber materials 27 are inserted into the some parts of the space between the box 12 and the aqueous urea tank 11 and around the aqueous urea tank 11. These thirteen rubber materials 27 support the aqueous urea tank 11 from outside individually so that the load applied to the aqueous urea tank 11 can be relaxed by the elasticity of the thirteen rubber materials 27. Particularly, the bottom portion of the aqueous urea tank 11 suffers the normal force against its own weight, that is, the load of the aqueous urea tank 11 (heavy object) from the heat insulating materials. Thus, a larger load is applied to the bottom portion of the aqueous urea tank 11 than to any other portion of the aqueous urea tank 11. The bottom portion of the aqueous urea tank 11 suffers not only the normal force against its own weight from the heat insulating materials but also the influence of vibration caused by work or the like easily. Accordingly, in the third embodiment of the invention, the three rubber materials 27 disposed under the aqueous urea tank 11 support the aqueous urea tank 11 from below while the eight rubber materials 27 disposed laterally to the aqueous urea tank 11 so that two rubber materials 27 disposed on each side face of the aqueous urea tank 11 support the aqueous urea tank 11 from side. Thus, the durability and vibration resistance of the aqueous urea tank 11 can be improved.

In addition, according to the third embodiment of the invention, the heat insulating material 13f is disposed in the air layer 20 which is in contact with the closest side face to the engine, of the four side faces of the aqueous urea tank 11. Accordingly, due to the heat insulating material 13f, the driving heat of the engine can be prevented from being transmitted directly to the aqueous urea tank 11, so that heat insulation from the driving heat of the engine can be achieved efficiently. As a result, with provision of the heat insulating material 13f around the aqueous urea tank 11 and only on the close side to the engine, the amount of heat insulating materials can be reduced so that the cost can be reduced.

The case where the top cover 12c of the box 12 is attached openably/closably by means of the hinge 17 has been described in the aforementioned first and third embodiments of the invention, and the case where the top cover 21c of the box 12 is attached by means of the bolts 30 and the nuts 32 has been described in the second embodiment of the invention. However, the invention is not limited to those cases, but the securing member may be covered with another member in accordance with the position, size, etc. of the supply port of the aqueous urea tank.

### REFERENCE SIGNS LIST

- 1: hydraulic excavator (construction machine)
- 3: revolving upperstructure
- 5: engine room
- 10: exhaust port
- 11: aqueous urea tank
- 11a: aqueous urea
- 11b: cover
- 11c, 11d: supply port
- 12: box (securing member)
- 12a: bottom plate
- 12b: side plate
- 12c, 21c: top cover
- 13a, 13b, 13c, 13d1, 13d2, 13e, 13f: heat insulating material
- 15, 30: bolt
- 17: hinge
- 18: pedestal
- 19, 31, 35: mounting portion
- 20: air layer
- 13b1, 21c1: through hole
- 22, 23a, 23b: flat plate
- 25: frame (securing member)
- 25a: bracket
- 27: rubber material (heat insulating material)
- 32: nut

## Claims

1. An aqueous urea tank structure for a construction machine, the aqueous urea tank structure being provided in the construction machine which has a revolving upperstructure, an engine disposed within the revolving upperstructure, and a hydraulic pump driven by drive force of the engine, the aqueous urea tank structure comprising an aqueous urea tank which is disposed within the revolving upperstructure to store aqueous urea that purifies exhaust gas discharged from the engine, the aqueous urea tank structure being **characterized in that**:
the aqueous urea tank structure further comprises a securing member which encloses the periphery of the aqueous urea tank to secure the aqueous urea tank within the revolving upperstructure, and heat insulating materials which are interposed between the securing member and the aqueous urea tank to hold the aqueous urea tank.

2. An aqueous urea tank structure for a construction machine according to Claim 1, **characterized in that**:
the securing member contains a box.

3. An aqueous urea tank structure for a construction machine according to Claim 1, **characterized in that**:
the securing member contains a frame.

4. An aqueous urea tank structure for a construction machine according to any one of Claims 1 through 3, **characterized in that**:
the heat insulating materials are disposed in some parts of a space between the securing member and the aqueous urea tank.

5. An aqueous urea tank structure for a construction machine according to Claim 4, **characterized in that**:
one of the heat insulating materials which is provided in a bottom portion of the aqueous urea tank is made of a rubber material.

## Amended claims

### Amended claims under Art. 19.1 PCT

**1.** Amended) An aqueous urea tank structure for a construction machine, the aqueous urea tank structure being provided in the construction machine which has a revolving upperstructure, an engine disposed within the revolving upperstructure, and a hydraulic pump driven by drive force of the engine, the aqueous urea tank structure comprising an aqueous urea tank which is disposed within the revolving upperstructure to store aqueous urea that purifies exhaust gas discharged from the engine, the aqueous urea tank structure being **characterized in that**:
the aqueous urea tank structure further comprises a securing member which encloses the periphery of the aqueous urea tank to secure the aqueous urea tank within the revolving upperstructure; and heat insulating materials which are interposed between the securing member and the aqueous urea tank to hole the aqueous urea tank; and
a mounting portion to which a bolt for fixing the securing member within the revolving upperstructure is attached is provided in a lower portion of the securing member.

**2.** An aqueous urea tank structure for a construction machine according to Claim 1, **characterized in that**:
the securing member contains a box.

**3.** An aqueous urea tank structure for a construction machine according to Claim 1, **characterized in that**:
the securing member contains a frame.

**4.** An aqueous urea tank structure for a construction machine according to any one of Claims 1 through 3, **characterized in that**:
the heat insulating materials are disposed in some parts of a space between the securing member and the aqueous urea tank.

**5.** An aqueous urea tank structure for a construction machine according to Claim 4, **characterized in that**:
one of the heat insulating materials which is provided in a bottom portion of the aqueous urea tank is made of a rubber material.

The claim 1 has made the point "a mounting portion to which a bolt for fixing the securing member within the revolving upperstructure is attached is provided in a lower portion of the securing member" clear.

However, the cited reference has not given any description about the point "a mounting portion to which a bolt for fixing a securing member within a revolving upperstructure is attached is provided in a lower portion of the securing member".
